# FASCICULE DE BREVET EUROPEEN

(11) **EP 3 486 166 B1**
(45) Date de publication et mention de la délivrance du brevet: **17.03.2021**
(21) Numéro de dépôt: 18205509.5
(22) Date de dépôt: 09.11.2018
(51) Int. Cl.: B64C 25/26, B64C 25/20, B64C 25/24, B64C 25/30

(54) **PROCÉDÉ DE MANOEUVRE D'UN ATTERRISSEUR D'AÉRONEF ENTRE UNE POSITION RÉTRACTÉE ET UNE POSITION DÉPLOYÉE**
VERFAHREN ZUM MANÖVRIEREN EINES LUFTFAHRZEUG-FAHRWERKS ZWISCHEN EINER EINGEZOGENEN UND EINER AUSGEFAHRENEN POSITION
METHOD OF OPERATING AN AIRCRAFT LANDING GEAR BETWEEN A RETRACTED POSITION AND AN EXTENDED POSITION

(30) Priorité: 15.11.2017 FR 1760763
(43) Date de publication de la demande: 22.05.2019
(73) Titulaire: Safran Landing Systems, 78140 Vélizy-Villacoublay (FR)
(72) Inventeur: FORTIER, Florent, 78140 Vélizy-Villacoublay (FR); DUBOIS, Sébastien, 78140 Vélizy-Villacoublay (FR)
(74) Mandataire: Lavialle, Bruno François Stéphane

(56) Documents cités:
- EP-A1- 0 557 181
- DE-A1-102014 003 157
- FR-A1- 2 946 319
- FR-A1- 2 958 981
- US-A- 2 437 135

## Description

L'invention concerne un procédé de manœuvre d'un atterrisseur d'aéronef mobile entre une position rétractée et une position déployée.

### ARRIERE PLAN DE L'INVENTION

On connaît des atterrisseurs d'aéronef montés mobiles sur l'aéronef entre une position rétractée et une position déployée. En général, chaque atterrisseur est associé à un actionneur de manœuvre pour déplacer l'atterrisseur de l'une à l'autre des positions. Lors de la descente, l'actionneur de manœuvre est essentiellement utilisé pour réguler la vitesse de descente, l'atterrisseur descendant de lui-même vers la position déployée sous l'action de la gravité et des efforts aérodynamiques. La position déployée est en général définie par l'alignement d'une contrefiche de l'atterrisseur et il importe de ralentir la course de l'atterrisseur à l'approche de la position déployée pour éviter tout choc préjudiciable à l'intégrité de l'atterrisseur. Ce ralentissement est simple à organiser avec un actionneur de manœuvre hydraulique linéaire, en prévoyant dans l'actionneur un ralentisseur de fin de course (dash-pot). Par ailleurs, la probabilité de blocage d'un tel actionneur est si faible qu'aucun système de débrayage n'est à prévoir pour satisfaire les exigences de certification.

Dans le cadre des programmes d'électrification des aéronefs, l'attention des avionneurs a été attirée vers l'utilisation d'actionneurs de type électromécanique. On a par exemple proposé dans le document FR 2946319 d'utiliser un actionneur de manœuvre de type électromécanique rotatif attelé à l'un des bras de l'organe de stabilisation de la contrefiche en position alignée pour à la fois assurer la manœuvre de l'atterrisseur et le déverrouillage de l'organe de stabilisation.

Il est difficile de réguler la vitesse de descente de l'atterrisseur avec ce type d'actionneur. En effet, Si la régulation est assurée par le moteur de l'actionneur, celui-ci agit alors essentiellement en frein et réinjecte du courant sur le réseau de l'aéronef, ce qui n'est en général pas désiré. Il convient alors d'équiper l'actionneur électromécanique d'un organe de régulation de vitesse et d'amortissement de fin de course, par exemple un dispositif de frottement mécanique ou encore un dispositif hydraulique comme celui illustré dans le document FR2958981 adapté à des actionneurs rotatifs. Cependant, ces dispositifs complexifient notablement l'actionneur électromécanique. En outre, la fiabilité de ce type d'actionneur n'est pas assez élevée pour se dispenser d'un système de débrayage permettant le déploiement de l'atterrisseur dans l'éventualité d'un blocage de l'actionneur. L'organe de régulation et d'amortissement doit être capable d'opérer même quand l'actionneur est débrayé, ce qui ajoute encore à la complexité d'un tel actionneur de manœuvre

D'autres exemples de l'art antérieur sont donnés par les documents DE102014003157 et US2437135.

### OBJET DE L'INVENTION

L'invention vise à proposer procédé de manœuvre d'un atterrisseur d'aéronef permettant d'utiliser un actionneur électromécanique simple.

### PRESENTATION DE L'INVENTION

En vue de la réalisation de ce but, on propose un procédé de manœuvre d'un atterrisseur d'aéronef mobile entre une position rétractée et une position déployée, le procédé comportant :
- l'utilisation d'un actionneur de manœuvre de type électromécanique rotatif attelé à une partie de l'atterrisseur pour assurer le relevage de la position déployée à la position rétractée ;
- le débrayage de l'actionneur de manœuvre lors d'une descente de l'atterrisseur de la position rétractée à la position déployée et l'utilisation d'un amortisseur linéaire hydraulique attelé à une partie de l'atterrisseur pour réguler une vitesse de descente et/ou amortir une arrivée de l'atterrisseur en position déployée ;
- la neutralisation de l'amortisseur lors du relevage.

Le procédé de l'invention permet d'utiliser un actionneur électromécanique très simple muni d'un simple organe de débrayage. La régulation et l'amortissement sont confiés à un amortisseur hydraulique très simple à concevoir. La régulation de vitesse est très facilement obtenue au moyen d'un simple orifice calibré, et peut même être variée tout au long de la course par utilisation d'une aiguille de laminage adaptée. L'amortissement de fin de course est très facilement réalisé au moyen d'un ralentisseur de fin de course. Enfin, la neutralisation de l'amortisseur lors du relevage est facilement obtenue de façon purement passive au moyen d'un clapet by-pass. L'amortisseur hydraulique est très simple à concevoir, et assure sa fonction même en cas de blocage de l'actionneur électromécanique. L'amortisseur est de préférence un organe autonome, non relié à un circuit hydraulique de l'aéronef. Le procédé de l'invention permet donc l'utilisation d'organes simples, et faciles à installer.

### PRESENTATION DES FIGURES

L'invention sera mieux comprise à la lumière de la description qui suit d'un mode particulier de mise en œuvre de l'invention en référence aux figures des dessins annexés parmi lesquelles
- La figure 1 est une vue de côté d'un atterrisseur faisant application des dispositions de l'invention, illustré ici en position déployée ;
- les figures 2 à 4 sont des vues de côté squelettiques de l'atterrisseur de la figure 1, montrant celui-ci à diverses étapes d'un relevage, à savoir la position déployée, une position intermédiaire, et la position rétractée ;
- la figure 5 est une vue schématique en coupe de l'amortisseur linéaire hydraulique équipant l'atterrisseur de la figure 1.

### DESCRIPTION DETAILLEE D'UN MODE PARTICULIER DE MISE EN ŒUVRE DE L'INVENTION

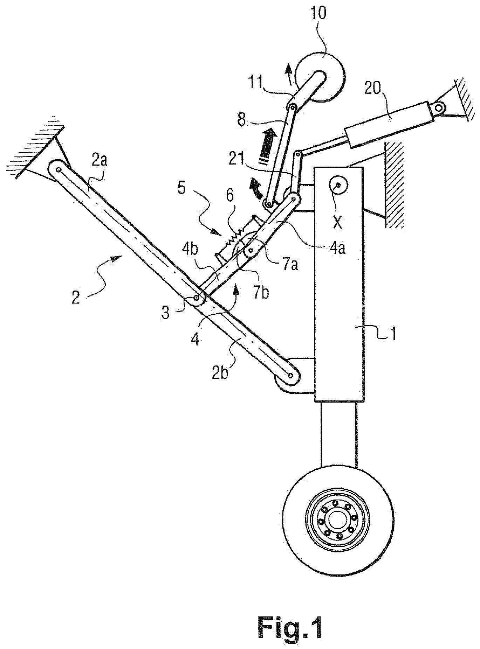

En référence tout d'abord à la figure 1, l'atterrisseur comporte de façon connue en soi une jambe 1 articulée à la structure de l'aéronef selon un axe d'articulation X (vu ici en bout) pour être mobile entre une position déployée illustrée ici dans laquelle l'atterrisseur est amené préalablement à un atterrissage, et une position rétractée qui est celle de l'atterrisseur en vol.

Une contrefiche briseuse 2 est articulée d'une part sur la jambe 1 et d'autre part sur la structure de l'aéronef. La contrefiche 2 briseuse comprend deux bielles 2a, 2b, articulées entre elles au niveau d'un genou 3. La bielle 2a est par ailleurs articulée sur l'aéronef, tandis que la bielle 2b est articulée sur la jambe 1. La contrefiche briseuse 2 est stabilisée en position sensiblement alignée au moyen d'un organe de stabilisation 4 comportant deux biellettes 4a, 4b, également articulées entre elles. La biellette 4a est articulée sur la jambe 1, et la biellette 4b est articulée sur la contrefiche 2. Les biellettes 4a, 4b sont maintenues en position sensiblement alignée par un organe de verrouillage 5 comportant des ressorts de rappel 6 rappelant les biellettes 4a, 4b vers la position de verrouillage définie par des butées 7a, 7b. Ainsi stabilisée, la contrefiche briseuse 2 s'oppose à toute rotation de la jambe 1 autour de son axe d'articulation X, de sorte que la position déployée est une position stable. Comme cela est bien connu, les bielles 2a, 2b et les biellettes 4a, 4b sont conçues de sorte que pour arriver à la position verrouillée illustrée ici, le genou d'articulation des bielles et le genou d'articulation des biellettes passent légèrement au-delà de l'alignement géométrique illustré par les traits interrompus.

Selon l'invention, un actionneur de manœuvre 10 est disposé sur la structure de l'aéronef pour être attelé à la biellette 4a de l'organe de stabilisation 4, celle qui est ici articulée sur la jambe 1. Ici, l'actionneur de manœuvre 10 est du type électromécanique rotatif et comporte un arbre de sortie entraînant une manivelle 11 qui est attelée à la biellette 4a au moyen d'une tringle 8 attelé à une manivelle 11 solidaire de l'arbre de sortie de l'actionneur de manœuvre 10. L'actionneur de manœuvre 10 est pourvu d'un organe de débrayage permettant de désolidariser en rotation la manivelle 11 de son arbre de sortie, et, partant, de désolidariser l'actionneur de manœuvre 10 de l'atterrisseur. Toujours selon l'invention, un amortisseur linéaire hydraulique 20, distinct de l'actionneur de manœuvre 10, est attelé d'une part à la structure de l'aéronef et d'autre part à une manivelle 21 solidaire de la biellette 4a.

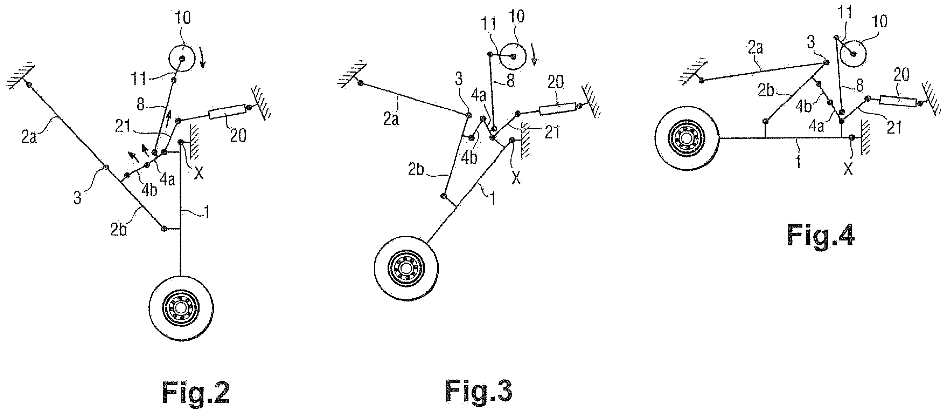

Le fonctionnement de l'ensemble est maintenant expliqué en référence aux figures 2 à 4. Lorsque 1' atterrisseur doit être remonté en position rétractée, 1' actionneur de manœuvre 10 est sollicité. Il exerce une traction sur la biellette 4a (voir flèche), ce qui a pour effet de faire pivoter celle-ci autour de son axe de rotation sur la jambe, et ainsi briser l'alignement des biellettes 4a, 4b à l'encontre de l'action des ressorts de rappel 6 de l'organe de verrouillage 5.

Comme la biellette 4b est attelée à la contrefiche 2, l'alignement des bielles 2a, 2b est également brisé. L'atterrisseur est ainsi déverrouillé et peut être pivoté autour de son axe d'articulation sous l'action de 1' actionneur de manœuvre 10, comme cela est illustré à la figure 3.

Alors que l'actionneur de manœuvre 10 continue à faire pivoter la biellette 4a, celle-ci entraîne successivement l'autre biellette 4b, les bielles 2a, 2b de la contrefiche 2, et, pour finir, la jambe 1 de l'atterrisseur. Tous ces éléments sont liés entre eux de sorte qu'à une position angulaire de la biellette 4a correspond une et une seule position de chacun de ces éléments. Le mouvement se poursuit jusqu'à la position illustré à la figure 4, dans laquelle la jambe 1 est arrivée en position rétractée.

Il importe de faire en sorte que lors du mouvement de l'atterrisseur de sa position déployée à sa position rétractée, la biellette 4a se déplace selon un mouvement continu et sans singularité, de sorte que le mouvement de la jambe peut être assurée au moyen d'une action continue et toujours dans le même sens de l'actionneur de manœuvre 10 sur la biellette 4a. Ainsi, avec un seul actionneur, on assure le désalignement de l'organe de stabilisation, ce qui provoque de le désalignement de la contrefiche, et, partant, le déplacement de la jambe.

Pour la descente de l'atterrisseur en position déployée, on commande l'organe de débrayage de l'actionneur de manœuvre 10, ce qui permet de désolidariser en rotation l'arbre de l'actionneur et la manivelle 11 à laquelle la tringle 8 est attelée. Ainsi, l'atterrisseur peut descendre librement sous l'action de la gravité et des forces aérodynamiques s'exerçant sur l'atterrisseur. De plus, la présence de l'organe de débrayage permet de garantir la descente de l'atterrisseur même en cas de défaillance, et en particulier de blocage, de l'actionneur de manœuvre 10.

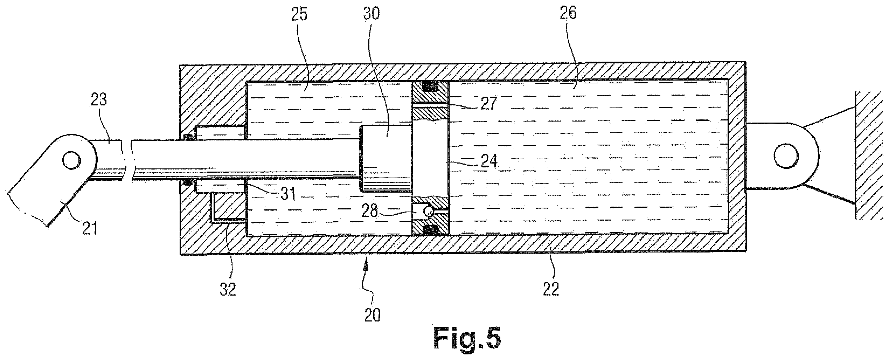

Le rôle de l'amortisseur linéaire hydraulique 20 est maintenant expliqué. Comme cela est visible à la figure 5, l'amortisseur linéaire hydraulique 20 comporte un corps 22 dans lequel une tige 23 terminée par un piston 24 coulisse à étanchéité, en définissant deux chambres 25 et 26 remplies de fluide hydraulique. Un orifice calibré 27 s'étendant au travers du piston 24 permet au fluide de passer d'une chambre à l'autre lors d'un allongement de l'amortisseur 20 en exerçant une résistance au passage du fluide proportionnelle au carré de la vitesse d'allongement. Un clapet by-pass 28 porté par le piston 24 permet au fluide de passer d'une chambre à l'autre sans résistance lors d'un raccourcissement de l'amortisseur 20. Enfin le piston 24 présente à sa base un renflement 30 qui pénètre à ajustement dans une cavité cylindrique 31 au fond du corps 22, emprisonnant du fluide qui ne peut ressortir que par un canal à diamètre calibré 32 qui renvoie le fluide vers l'une des chambres de l'amortisseur (dispositif connu sous le nom de dash-pot). Un dispositif d'accumulation non représenté absorbe ou fournit les différences de volume de fluide entre les deux chambres lors des manœuvres de l'atterrisseur.

Ainsi, pendant le relevage de l'atterrisseur illustré aux figures 2 à 4, l'amortisseur linéaire hydraulique 20 raccourcit mais n'exerce aucune résistance, le by-pass 28 permettant le passage libre d'une chambre à l'autre du fluide hydraulique et neutralisant ainsi de façon entièrement passive l'amortisseur linéaire hydraulique lors du relevage.

Au contraire, pendant la descente de l'atterrisseur sous le seul effet de la gravité et des forces aérodynamiques, l'amortisseur linéaire hydraulique 20 s'allonge et le fluide interne est forcé à passer d'une chambre à l'autre au travers de l'orifice calibré 27, induisant un laminage du fluide et donc un effort résistant proportionnel au carré de la vitesse d'allongement de l'amortisseur, ce qui régule la vitesse de descente de l'atterrisseur. En fin de course, juste avant que les biellettes 4a,4b ne parviennent à la position de verrouillage définie par les butées 7a,7b, le renflement 30 pénètre à ajustement dans la cavité 31, forçant le fluide ainsi emprisonné à sortir par l'orifice calibré 32, ce qui ralentit fortement l'atterrisseur évitant ainsi tout choc brutal lors de l'arrivée de l'atterrisseur en position déployée.

L'amortisseur linéaire hydraulique 20 fonctionne lors de toute descente de l'atterrisseur, que celle-ci soit commandée volontairement par le pilote préalablement à un atterrissage, ou consécutivement à un blocage de l'actionneur de manœuvre 10 lors d'un relevage amenant le pilote à commander une sortie de secours de l'atterrisseur lors de laquelle l'actionneur de manœuvre 10 est désolidarisé de l'atterrisseur par commande de son organe de débrayage.

L'invention n'est pas limitée à ce qui vient d'être décrit, mais englobe au contraire toute variante entrant dans le cadre défini par les revendications.

En particulier, bien que dans l'exemple illustré, l'actionneur de manœuvre 10 est attelé à l'une des biellettes de l'organe de stabilisation, ce qui permet son déverrouillage en même temps que le relevage de l'atterrisseur, on pourra disposer l'actionneur de manœuvre autrement, par exemple directement sur le pivot de la biellette 4A, ou encore en l'attelant à la jambe de l'atterrisseur ou à l'une des bielles de la contrefiche. Il faudra alors prévoir un actionneur de déverrouillage pour désaligner les biellettes de l'organe de stabilisation lors du relevage de l'atterrisseur.

De préférence, l'amortisseur linéaire hydraulique est disposé pour agir sur l'une des biellettes de l'organe de verrouillage pour amortir l'arrivée en position verrouillée des biellettes, et, partant, l'arrivée en position alignée de la contrefiche. Cependant, il pourra être disposé autrement, par exemple en étant attelé entre la contrefiche et l'organe de stabilisation, ou en étant attelé entre la structure de l'aéronef et la jambe de l'atterrisseur. En outre, il pourra être disposé de façon à se raccourcir lors de la descente de l'atterrisseur et s'allonger lors du relevage de l'atterrisseur. Enfin, si nécessaire, une variation de l'effort résistant avec la course de l'amortisseur pourra être organisée, par exemple au moyen d'une aiguille de laminage.

Enfin, les dispositions de l'invention s'appliquent particulièrement à un atterrisseur comportant au moins une contrefiche briseuse et à organe de stabilisation à alignement. Mais elles peuvent s'appliquer à d'autres types d'atterrisseurs, notamment des atterrisseurs à contrefiche briseuse à verrouillage interne, ou encore des atterrisseurs à contrefiche télescopique.

## Revendications

1. Procédé de manœuvre d'un atterrisseur d'aéronef (1) mobile entre une position rétractée et une position déployée, le procédé comportant :
- l'utilisation d'un actionneur de manœuvre (10) de type électromécanique rotatif attelé à une partie de l'atterrisseur (4a) pour assurer le relevage de la position déployée à la position rétractée ;
- le débrayage de l'actionneur de manœuvre lors d'une descente de l'atterrisseur de la position rétractée à la position déployée et l'utilisation d'un amortisseur linéaire hydraulique (20) attelé à une partie de l'atterrisseur (4a) pour réguler une vitesse de descente et/ou amortir une arrivée de l'atterrisseur en position déployée ;
- la neutralisation de l'amortisseur lors du relevage.

2. Procédé selon la revendication 1, appliqué à un atterrisseur comportant au moins une contrefiche briseuse à deux bielles (2a,2b), stabilisée en position alignée par un organe de stabilisation à deux biellettes (4a,4b) rappelées en position d'alignement par un organe ressort (6) d'un organe de verrouillage (5), dans lequel l'actionneur de relevage (10) est attelé à l'une des biellettes de l'organe de verrouillage (4a).

3. Procédé selon la revendication 2, dans lequel l'amortisseur linéaire hydraulique (20) est également attelé à l'une des biellettes de l'organe de stabilisation (4a).

4. Procédé selon la revendication 1, dans lequel le débrayage de l'actionneur de manœuvre est réalisé grâce à un organe de débrayage équipant l'actionneur de manœuvre et permettant de désolidariser un arbre de sortie de l'actionneur de manœuvre d'un élément (11) entraîné par l'arbre de sortie pour manœuvrer l'atterrisseur.

5. Procédé selon la revendication 1, dans lequel la neutralisation de l'amortisseur linéaire hydraulique (20) est obtenue de manière passive par un by-pass (28) installé entre deux chambres (25,26) de l'amortisseur.

## Patentansprüche

1. Verfahren zum Manövrieren eines Luftfahrzeugfahrwerks (1), das zwischen einer eingezogenen Position und einer ausgefahrenen Position beweglich ist, wobei das Verfahren umfasst:
- die Nutzung eines Stellaktors (10) vom Typ elektromechanischer Drehaktor, der an einen Teil des Fahrwerks (4a) gekoppelt ist, um das Einziehen von der ausgefahrenen Position in die eingezogene Position sicherzustellen;
- das Ausrücken des Stellaktors während einer Abwärtsbewegung des Fahrwerks von der eingezogenen Position in die ausgefahrene Position und die Nutzung eines hydraulischen Lineardämpfers (20), der an einen Teil des Fahrwerks (4a) gekoppelt ist, um eine Geschwindigkeit der Abwärtsbewegung zu regulieren und/oder ein Ankommen des Fahrwerks in der ausgefahrenen Position zu dämpfen;
- die Neutralisierung des Dämpfers während des Einziehens.

2. Verfahren nach Anspruch 1, angewandt bei einem Fahrwerk, das mindestens eine Unterbrecherstrebe mit zwei Stangen (2a, 2b) umfasst, die durch ein Stabilisierungselement mit zwei kleinen Stangen (4a, 4b) in einer fluchtenden Position stabilisiert wird, wobei die kleinen Stangen durch ein Federelement (6) eines Verriegelungselements (5) in die Fluchtstellung rückgestellt werden, und wobei der Aktor (10) zum Einziehen an eine der kleinen Stangen des Verriegelungselements (4a) gekoppelt ist.

3. Verfahren nach Anspruch 2, bei dem der hydraulische Lineardämpfer (20) ebenfalls an eine der kleinen Stangen des Stabilisierungselements (4a) gekoppelt ist.

4. Verfahren nach Anspruch 1, bei dem das Ausrücken des Stellaktors dank eines Ausrückelements erfolgt, mit dem der Stellaktor ausgestattet ist und das ein Lösen einer Abtriebswelle des Stellaktors von einem Element (11) gestattet, das von der Abtriebswelle angetrieben wird, um das Fahrwerk zu manövrieren.

5. Verfahren nach Anspruch 1, bei dem die Neutralisierung des hydraulischen Lineardämpfers (20) auf passive Weise durch eine Umgehungsleitung (28) erreicht wird, die zwischen zwei Kammern (25, 26) des Dämpfers installiert ist.

## Claims

1. A method of moving an aircraft undercarriage (1) that is movable between a retracted position and a deployed position, the method comprising:
• using a rotary electromechanical type drive actuator (10) coupled to a portion of the undercarriage (4a) in order to raise it from the deployed position to the retracted position;
• disengaging the drive actuator during a descent of the undercarriage from the retracted position to the deployed position and using a hydraulic linear shock absorber (20) coupled to a portion of the undercarriage (4a) in order to regulate the rate of descent and/or in order to absorb shock on arrival of the undercarriage in the deployed position; and
• neutralizing the shock absorber while raising the undercarriage.

2. A method according to claim 1, applied to an undercarriage including at least one breakable strut having two rods (2a, 2b) stabilized in an aligned position by a stabilizer member having two links (4a, 4b) and urged into the aligned position by a spring member (6) of a locking member (5), wherein the raising actuator (10) is coupled to one of the links of the locking member (4a) .

3. A method according to claim 2, wherein the hydraulic linear shock absorber (20) is also coupled to one of the links of the stabilizer member (4a).

4. A method according to claim 1, wherein the drive actuator is disengaged by a clutch member forming part of the drive actuator that enables an outlet shaft of the drive actuator to be disengaged from an element (11) driven by the outlet shaft in order to move the undercarriage.

5. A method according to claim 1, wherein the hydraulic linear shock absorber (20) is neutralized in passive manner by a bypass (28) installed between two chambers (25, 26) of the shock absorber.
